# EUROPEAN PATENT APPLICATION

(11) **EP 4 679 769 A1**
(43) Date of publication of application: **14.01.2026**
(21) Application number: 24275082.6
(22) Date of filing: 12.07.2024
(51) Int. Cl.: H04L 9/32

(54) **DIGITAL SIGNATURE SCHEME**

(71) Applicant: nCipher Security Limited, Cambridge CB1 2GA (GB)
(72) Inventor: KETTLEWELL, Richard John, Cambridge, CB1 2GA (GB)
(74) Representative: Marks & Clerk LLP

(57) **Abstract**

An apparatus for implementing a digital signature scheme, wherein the apparatus is configured to perform the steps of:
(i) obtaining, from each backup device of a first subset of a set of N backup devices, a corresponding indication of reserved counter values, wherein the first subset comprises R backup devices connected to the apparatus;
(ii) determining a new range of counter values which are all different from all the reserved counter values;
(iii) providing an indication of the new range of counter values to a second subset of the set of N backup devices, whereby the new range of counter values is added to the reserved counter values by updating an indication of reserved counter values on each backup device of the second subset based on the indication of the new range of counter values, wherein the second subset comprises W backup devices connected to the apparatus, and wherein R + W > N; and
(iv) generating digital signatures using the private key and the counter values from the new range of counter values.

## Description

### Technical field

The present invention concerns a digital signature scheme.

### Background

Various devices are designed to store and perform operations with sensitive data. For example, a Hardware Security Module (HSM) is a device that securely stores and manages cryptographic keys, and performs a set of cryptographic operations, such as generating a cryptographic key, performing encryption and decryption, or performing digital signature and verification operations. The HSM may use stateless or stateful signature schemes for generating digital signatures.

A stateful Hash-Based Signature Scheme (SHBS) is a public-key cryptographic signature scheme constructed from cryptographic hash functions. An example is the Leighton-Micali Signature Scheme (LMS) defined in RFC8554.

Unlike classical signature schemes, such as Elliptic Curve Digital Signature Algorithm (ECDSA), stateful schemes depend on the secure management of a counter value, whereby every signature must be generated using a distinct counter value. If two signatures are generated using the same counter value, then the security of the scheme is compromised, and an attacker may construct forged signatures.

Providing and managing backups of a private key in such a stateful signature scheme can be problematic due to the requirement of single use counter values.

### Summary

The present invention provides means for securely managing counter values for a stateful signature scheme, when using backup devices. A corresponding indication of reserved counter values is obtained from each of a subset of the backup devices, from which a new range of (unreserved) counter values can be determined. A new indication of reserved counter values is then provided to the same or a different subset of the backup devices. The numbers of backup devices in the subsets are set such that at least one of the latest backups (with the latest indication of reserved counter values) is obtained in the backup process. This ensures that a device never reserves or uses a counter value previously reserved or used.

Embodiments escribed herein may thereby a LMS (or other SHBS) algorithm to be applied in a wider range of use cases. For example, it could allow its use of such signature schemes in cases with stricter availability requirements.

According to a first aspect there is provided an apparatus for implementing a digital signature scheme, wherein the apparatus is configured to perform the steps of:
(i) obtaining, from each backup device of a first subset of a set of N backup devices, a corresponding indication of reserved counter values (note that these reserved values are typically different for different ones of the backup devices, though they may have reserved counter values in common), wherein the first subset comprises R backup devices connected to the apparatus;
(ii) determining a new range of counter values which are all different from all the reserved counter values;
(iii) providing an indication of the new range of counter values to a second subset of the set of N backup devices, whereby the new range of counter values is added to the reserved counter values by updating an indication of reserved counter values on each backup device of the second subset based on the indication of the new range of counter values, wherein the second subset comprises W backup devices connected to the apparatus, and wherein R + W > N; and
(iv) generating digital signatures using the private key and the counter values from the new range of counter values.

By setting R + W > N, at least one copy of the latest backup is accessed by the apparatus. For example, R = N + 1 - W. In one embodiment, when N is an odd number, R = W = (N + 1) ÷ 2, and when N is an even number, R = W + 1 and W = N ÷ 2. It may be beneficial to reduce the number of write operations (W) compared to the number of reads (R), in order mitigate the risk of a faulty write operation. The updated indication of reserved counter values can be the same as the indication of the new range of counter values, which is then added automatically to the reserved counter values by maintaining the relation R + W > N.

N (the number of backup devices to which the private key is backed up and to which the apparatus has access) may be in the range of 3 to 10. Greater security can be achieved with a larger number of backup devices, but too many can make the process too complicated, as more backup devices need to be connected to the apparatus in order to perform a successful backup process.

The new range of counter values may comprise K counter values, wherein K = 2^x, and wherein x is an integer. For example, the new range may comprise eight counter values (K = 8) or sixteen counter values (K = 16). This can be beneficial for certain signature schemes, for example where the counter values are selected from a Merkle tree.

The set of backup devices may comprise at least one of a smart card, a USB storage device, a hard drive and a CD. The apparatus is authorised to access (read and write) to each one of the backup devices in the set of N backup devices.

The apparatus may be further configured to generate the private key and to provide a copy of the private key and an initial counter value to each backup device in the set of N backup devices. Hence, the apparatus may perform the initial backup to the backup devices and initialise the indication of reserved counter values (e.g. Q = 0).

The apparatus may be further configured to perform steps (i)-(iv) multiple times, each performance of steps (i)-(iv) except the first performance of steps (i)-(iv):
being performed upon every counter value in the range of counter values determined in the previous performance of step (ii) having been used in the previous performance of step (iv); and
determining in step (ii) the new range of counter values as counter values which are each different from all the counter values determined in all previous performances of step (ii).

Hence, each time the apparatus runs out of counter values to use for generating signatures, it may repeat the described process to determine a new range of counter values and update the reserved counter values accordingly.

The apparatus may be further configured to compare the new range of counter values to a maximum counter value, and when a counter value in the new range exceeds the maximum counter value, flag an error. Depending on the signature scheme, the number of available counter values to reserve may be finite. Hence, the apparatus may be configured to determine when all available counter values (e.g. when the Merkle tree has been exhausted) and then flag an error. The apparatus may stop the backup process to prevent the security being compromised.

The apparatus can be associated with a physical interface operative to allow the apparatus to communicate during a period with a number of the backup devices which is at least the higher of R and W, the first and second sub-sets of the backup devices being selected from backup devices which are connected to the apparatus via the interface during the period. For example, the backup device may comprise one or more USB storage devices, card readers, CD drives etc. This can allow a greater number of backup devices to be simultaneously connected to the apparatus, which in turn can allow for a greater number N of backup devices and thereby greater security.

As an example, the digital signature scheme may use a Leighton-Micali Signature Scheme (LMS) or an Extended Markel Signature Scheme (XMSS) to set the range of counter values and generate the digital signatures. These are examples of stateful signature schemes using counter values.

The apparatus may be further configured to, in step (i), obtain, from the first subset of backup devices, a copy of the private key. For example, the apparatus may be configured to, when the apparatus already stores the private key, obtain the indication of reserved counter values but not the private key from backup, and when the apparatus does not have a copy of the private key, obtain both the indication of reserved counter values and the private key from backup.

The apparatus may be further configured to, in step (i), obtain, from the first subset of backup devices, an indication of N and optionally at least one of an indication of R and an indication of W. The apparatus may have pre-set information of the number of required read and writes, or may obtain this information from the backup devices. This can ensure that each apparatus that accesses the backup performs the required number of reads and writes.

According to a second aspect there is provided a security system comprising:
a set of N backup devices, wherein each backup device in the set comprises a copy of a private key; and
a plurality of apparatuses, each apparatus being according to first aspect, wherein the apparatus is authorised to access the set of backup devices.

The security system may further comprise an access control mechanism, the plurality of apparatuses being operative to access selected ones of the plurality of backup devices during successive corresponding periods using the access control mechanism, and during each period the corresponding apparatus performs steps (i)-(iii).

The access control mechanism may comprise, for each apparatus, a corresponding associated physical interface, each physical interface being operative during a corresponding one of the periods to communicatively couple the corresponding apparatus to a number of the backup devices which is at least the higher of R and W.

According to a third aspect there is provided a method of implementing a digital signature scheme, the method comprising:
(i) obtaining, from each backup device of a first subset of a set of N backup devices, a corresponding indication of reserved counter values, wherein the first subset comprises R backup devices connected to the apparatus;
(ii) determining a new range of counter values which are all different from all the reserved counter values;
(iii) providing an indication of the new range of counter values to a second subset of the set of N backup devices, whereby the new range of counter values is added to the reserved counter values by updating an indication of reserved counter values on each backup device of the second subset based on the indication of the new range of counter values, wherein the second subset comprises W backup devices connected to the apparatus, and wherein R + W > N; and
(iv) generating digital signatures using the private key and the counter values from the new range of counter values.

The method may be implemented with the apparatus according to the first aspect or with the security system according to the second aspect described above.

The step of providing the indication of the new range of counter values to the second subset of backup devices may comprise overwriting an old indication of a range of counter values.

The method may further comprise adding a backup device to the set of backup devices or removing a backup device from the set of backup devices, and then updating N accordingly. For example, if a backup device is (irretrievably) lost (e.g. shredded smart card), N can then be updated to reflect this change to optimise the backup scheme for the current number of backup devices.

### Brief description of drawings

Figure 1 shows a schematic diagram of a security system;
Figure 2 shows a schematic diagram of a set of backup devices at different instances in a backup process;
Figures 3A to 3C show schematic diagrams of a backup process;
Figure 4 shows a schematic diagram of a backup process with three security devices five backup devices; and
Figure 5 shows a flow diagram of the steps of a backup process according to an embodiment.

### Detailed description

Various devices may be designed to store and perform operations with sensitive data. For example, a Hardware Security Module (HSM) is a device that securely stores and manages cryptographic keys, and performs a set of cryptographic operations, such as generating a cryptographic key, performing encryption and decryption or performing digital signature and verification operations.

For stateful signature schemes, it is essential that the association between the private key and the current counter value is maintained. This is a security challenge if the key is to be backed up, since it's essential that restoring a backup cannot 'roll back' the counter value, leading to re-use of counter values that have already been used. It also represents a security challenge if the private key is to be used by multiple devices (such as HSMs), since it is essential that no two devices use the same counter value when generating a signature.

One possible solution to this backup problem is to forbid all forms of backup of private keys used in stateful signature schemes. The National Institute for Standards and Technology (NIST) SP800-208 (Recommendation for Stateful Hash-Based Signature Schemes) suggests this approach. However, this may pose an operational challenge to using hash-based signature schemes with high value keys. If backups are forbidden, and the single device holding the key fails, the key is lost. The key owner will no longer be able to generate signatures. This loss can be associated with significant costs for the key owner.

A technical solution to ensuring that the association between private key and counter can be maintained despite the existence of backups is therefore highly desirable.

To solve this problem, where a key may be used by any number of devices (e.g. HSMs), any device which holds a copy of the key also holds a reservation consisting of a range of counter values that may be used (exclusively) by that device. When the key is created, it is backed up to a multiple backup devices (e.g. smartcards or USB storage). When an HSM needs to create one or more signatures, it reads a subset of the backup devices to determine what counter range it can use, and updates a subset of the backup devices to ensure that no other HSM uses this reservation. The HSM may then generate a number of signatures using the reservation without accessing the backup device. The size of backup device subsets from which to read and to write is chosen to ensure that no two reservations can overlap, thereby preventing counter re-use.

The backup devices that store a copy of the key and a counter value, are secured so that only authorized devices can read or modify the backup. The way that backups are secured ensures that they cannot be read by or modified by unauthorized parties.

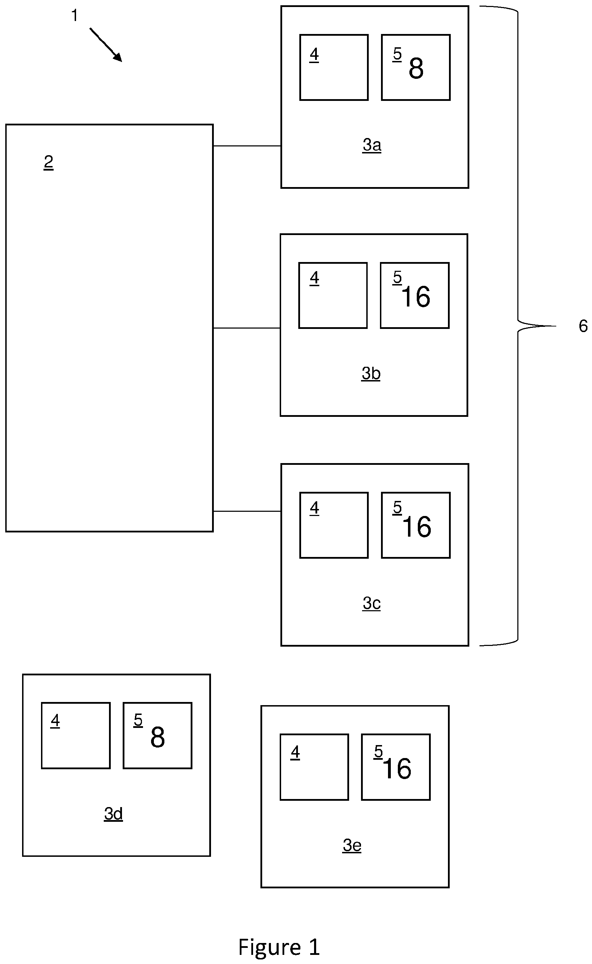

Figure 1 shows a schematic diagram of a security system 1 comprising an apparatus 2 (also referred to as "device" or "security device" herein) for implementing a digital signature scheme, the apparatus 2 being an HSM for implementing a stateful hash based signature scheme. The security system 1 comprises a set of N = 5 backup devices 3a to 3e each comprising a copy of a private key 4 and an indication of reserved counter values 5. The backup devices may for example be smart cards, on which the private key has been stored. A first subset 6 of R = 3 backup devices 3a to 3c are connected to the apparatus 2. The first subset 6 of backup devices may be connected to the apparatus 2 by a card reader or other means. The apparatus 2 is configured to obtain the corresponding indication of reserved counter values 5 from each backup device 3a to 3c of the first subset 6 that is connected to the apparatus 2. The apparatus 2 is configured to also obtain a copy of the private key 4 from the first subset 6, when not already stored by the apparatus 2. To obtain the private key 4 and the indication of reserved counter values 5 from a backup device 3, the apparatus 2 must be authorised to access that backup device 3 and may read then read encrypted data on the backup device 3. This prevents any un-authorised device from obtaining a copy of the private key from the backup device 3. The apparatus 2 comprises a memory 8, which may comprise one or more memory modules in the apparatus 2. The number of backup devices N = 5 may be stored in the memory 8. Furthermore, the required number of backup devices to read from R and the required number of backup devices to write to W may also be stored in the memory 8.

From the indications of reserved counter values, the apparatus 2 determines a new range of counter values that has not already been reserved. The new range of counter values can therefore be used for generating signatures without compromising the private key 4. For example, each backup device 3a to 3c may store a number indicating the highest counter value that has been reserved. In the illustrated example, one backup device 3a stores the number 8, and the other two backup devices store the number 16.

From these indications, the apparatus 2 determines a new range of counter values 16 ≤ Q < 24 (which does not include any of the reserved counter values). The apparatus 2 then provides the number 24 as an indication of the new range of counter values to a second subset of W = 3 of the backup devices 3a and 3e, thereby reserving the new range of counter values. For example, the apparatus 2 can be configured to overwrite the indication of the reserved counter values 5 with this new indication of counter values, which now includes the new range of counter values.

The HSM and may be configured to perform the steps (i) to (iv) by running software inside the HSM (i.e. firmware).

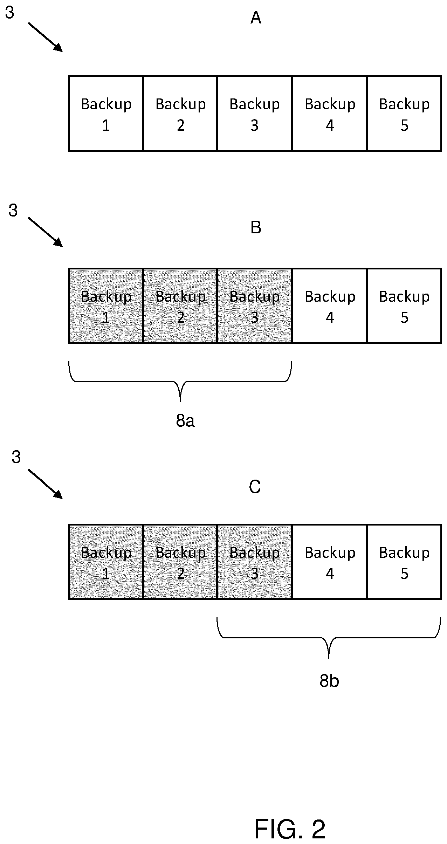

Figure 2 shows a schematic diagram of a set of N = 5 backup devices 3 at three different instances (A to C) in a backup process. The same reference numerals have been used in different figures to indicate the similar or equivalent features for clarity, and are not intended to limit the scope of the illustrated embodiments. In this example, W = R = 3. At step A, the five backup devices 3 (e.g. smart cards) are provided for storing the private key and an indication of reserved counter values. At step B, a new backup is made, comprising a new indication of reserved counter values. Since W = 3, the new backup is written to a first subset 8a of three of the five backup devices 3. At step C, a backup is retrieved from the backup devices 3. In particular, the indication of reserved counter values is obtained from a second subset 8b of three of the backup devices 3 (since R = 3). Since W + R < N, the second subset necessarily comprises at least one backup device 3 with the latest copy of the backup (provided in step B). The values of one or more of N, W and R may also be stored at the backup devices 3 and obtained when accessing one of the backup devices 3.

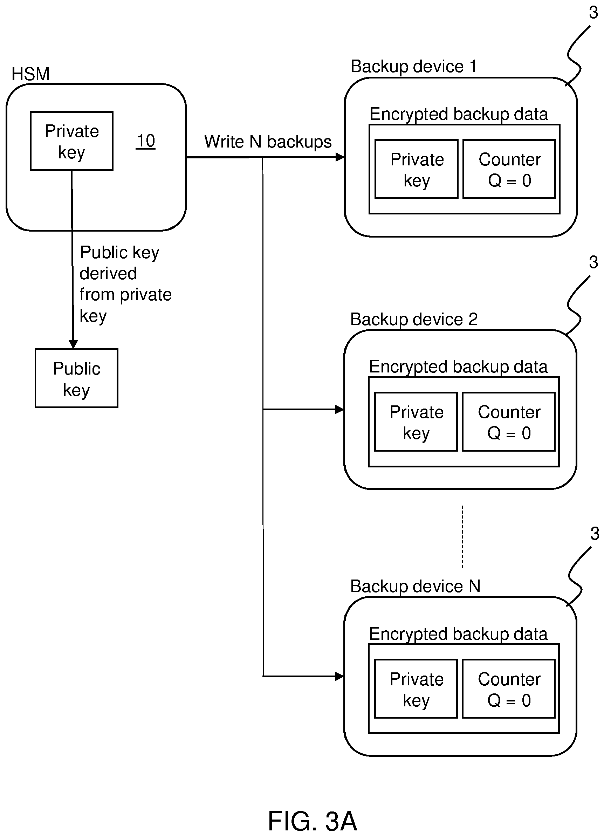

Figures 3A to 3C illustrate a backup process using a security device being an HSM 10 and N backup devices.

In Figure 3A, the HSM 10 provides the private key to the backup devices by writing N backups to the N backup devices 3. The private key may be a LMS private key for example. Each backup device is set with an initial counter value (Q = 0), indicating that there are currently no reserved counter values. The HSM 10 also provides a public key derived from the private key.

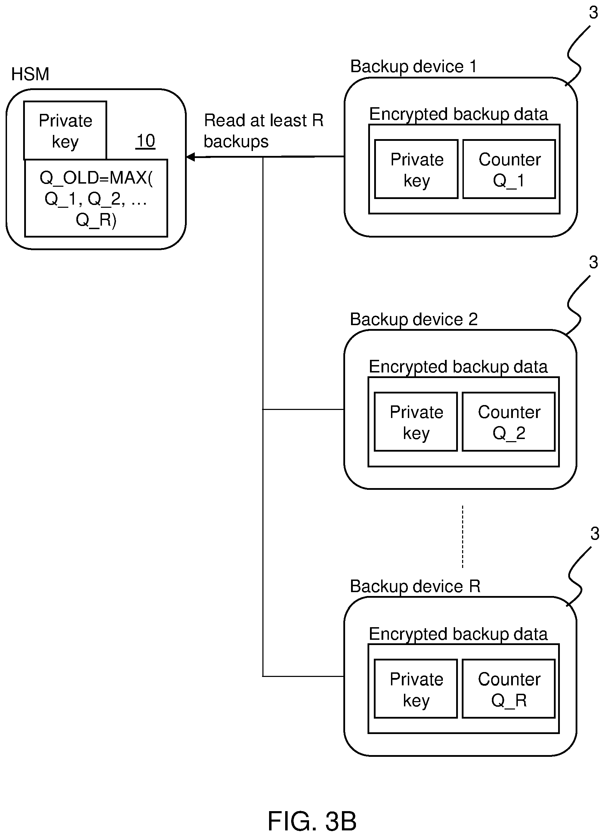

In Figure 3B, the HSM 10 is accessing a subset of R of the N backup devices and obtaining an indication of reserved counter values Q_1, Q_2,...,Q_R from each backup device 3 in the subset. From the obtained counter values, the HSM 10 determines a range of reserved counter values. In this embodiment, the range of reserved counter values includes all counter values equal to or less than the highest counter value obtained from the backup devices: Q_OLD=MAX(Q_1, Q_2, ... Q_R), wherein all counter values less than Q_OLD are reserved. In this case, since the HSM 10 already has a copy of the private key, it does not have to obtain a new copy from the backup devices 3. In a different scenario, where a new HSM is accessing the backup devices 3, the HSM may obtain a copy of the private key along with the indication of reserved counter values from the backup devices 3.

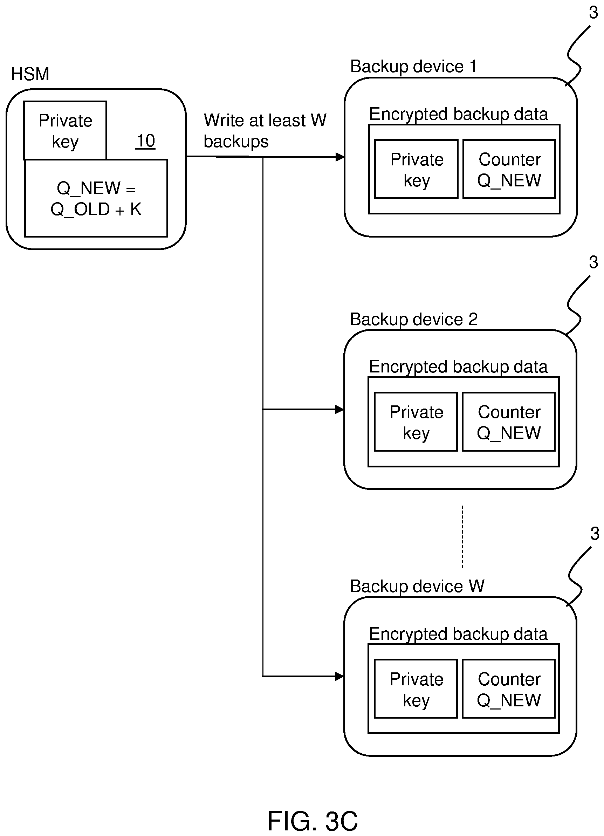

In Figure 3C, the HSM 10 determines a new range of counter values that can be used for generating signatures with the private key. In this embodiment, the HSM 10 determines a new counter value Q_NEW = Q_OLD + K, wherein K is a positive integer (e.g. 8, 16 or 32) and wherein the new reserved counter values Q are Q_OLD ≤ Q < Q_NEW. The HSM 10 provides an indication of the new range of reserved counter values to a second subset of W backup devices 3 of the N backup devices 3. The first and second subset may be the same or different subset and may contain the same or different numbers of backup devices. Importantly, R + W > N, to ensure that at least one of the latest backups is accessed during a backup process. The values of N, R and/or W may also be stored in the backup devices and obtained therefrom by the HSM 10. The HSM 10 writes Q_NEW to the second set of backup devices to replace the old indication of reserved counter values on these backup devices 3. Since each backup device 3 in the second subset already stores a copy of the private key, the HSM 10 does not need to provide a new copy of the private key during the backup process.

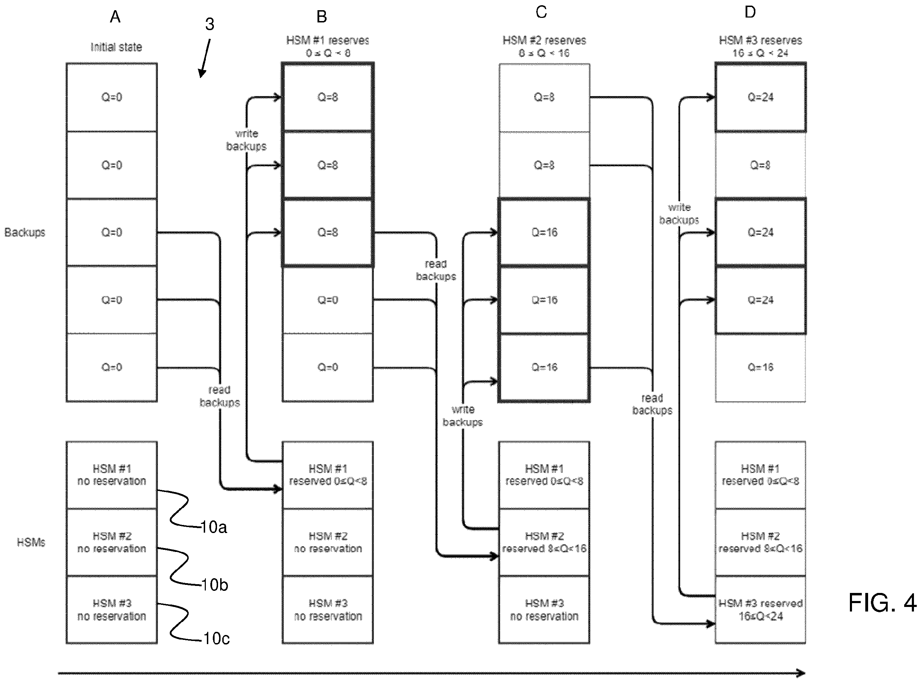

Figure 4 shows a schematic diagram of a backup process with three security devices being HSMs 10 and a set of N = 5 backup devices. The backup process is divided into four steps in time A to D.

At step A, the backup devices 3 are in an initial state with the indication of reserved counter values Q set to 0. The three HSMs 10 have no reserved counter values at this stage.

At step B, the first HSM 10a obtains the indication of reserved counter values Q = 0 from a subset of R = 3 backup devices 3. If the first HSM 10a does not have a copy of the private key, then the private key is also obtained in this step. The first HSM 10a determines a new range of counter values 0 ≤ Q < 8 (eight counter values). Each counter value is usable once to generate a signature using the private key. After determining the new range of reserved counter values, the first HSM 10a provides an indication (Q = 8) of this new range to a second subset of W = 3 backup devices 3. For example, the HSM 10a may overwrite the old indication of reserved counter values on the backup devices with the new indication. By so doing, the first HSM 10a has now reserved this range of counter values 0 ≤ Q < 8, which may not be used by any other device for use with the private key to generate signatures.

At step C, the second HSM 10b obtains the indication of reserved counter values from the first subset of backup devices. From two of the backup devices 3 it obtains the counter value 0 (initial state), but from the third backup device it obtains the latest indication of reserved counter values Q = 8, indicating that the range 0 ≤ Q < 8 of counter values is reserved. The second HSM 10b determines a new range of counter values 8 ≤ Q < 16, which does not include any of the reserved counter values, and writes a new indication of reserved counter values Q = 16 to a subset of W = 3 backup devices. Hence, the new range of counter values is added to the range of reserved counter values.

At step D, the third HSM 10c obtains the indication of reserved counter values from another subset of R = 3 backup devices. From two of the backup devices 3 it obtains the counter value Q = 8, but from the third backup device it obtains the latest indication of reserved counter values Q = 16, indicating that the range 0 ≤ Q < 16 of counter values is reserved. The third HSM 10c determines a new range of counter values 16 ≤ Q < 24, which does not include any of the reserved counter values, and writes a new indication of reserved counter values Q = 24 to a another subset of W = 3 backup devices. Hence, the new range of counter values reserved by the third HSM 10c is added to the range of reserved counter values.

When an HSM 10 has used all the (eight) reserved counter values, it can access the backup devices 3 again to reserve a new range of counter values in the same manner.

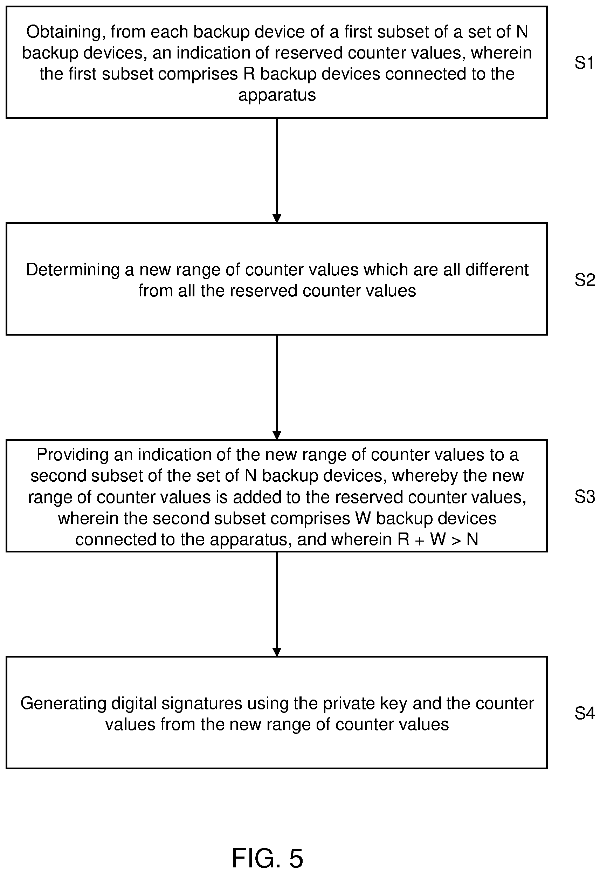

Figure 5 shows a flow diagram of the steps of a method of implementing a digital signature scheme according to an embodiment. The method comprises obtaining, from each backup device of a first subset of a set of N backup devices, an indication of reserved counter values, wherein the first subset comprises R backup devices connected to the apparatus (step S1), and determining a new range of counter values which are all different from all the reserved counter values (step S2). The method further comprises providing an indication of the new range of counter values to a second subset of the set of N backup devices, whereby the new range of counter values is added to the reserved counter values, wherein the second subset comprises W backup devices connected to the apparatus, and wherein R + W > N (step S3), and then generating digital signatures using the private key and the counter values from the new range of counter values (step S4).

In step S1, the method may also comprise obtaining a copy of the private key from the first subset of backup devices, and step S3 may also comprise providing a copy of the private key to the second subset of backup devices.

While certain embodiments have been described, these embodiments have been presented by way of example only, and are not intended to limit the scope of the invention as claimed. Indeed the novel methods and apparatus described herein may be embodied in a variety of other forms; furthermore, various omissions, substitutions and changes in the form of methods and apparatus described herein may be made.

## Claims

1. An apparatus for implementing a digital signature scheme, wherein the apparatus is configured to perform the steps of:
(i) obtaining, from each backup device of a first subset of a set of N backup devices, a corresponding indication of reserved counter values, wherein the first subset comprises R backup devices connected to the apparatus;
(ii) determining a new range of counter values which are all different from all the reserved counter values;
(iii) providing an indication of the new range of counter values to a second subset of the set of N backup devices, whereby the new range of counter values is added to the reserved counter values by updating an indication of reserved counter values on each backup device of the second subset based on the indication of the new range of counter values, wherein the second subset comprises W backup devices connected to the apparatus, and wherein R + W > N; and
(iv) generating digital signatures using the private key and the counter values from the new range of counter values.

2. An apparatus according to claim 1, wherein R = N + 1 - W.

3. An apparatus according to claim 1 or 2, wherein when N is an odd number R = W = (N + 1) ÷ 2, and when N is an even number R = W + 1 and W = N ÷ 2.

4. An apparatus according to any one of the preceding claims, wherein
N is in the range of 3 to 10; and/or
the new range of counter values comprises Q counter values, wherein Q = 2^x, and wherein x is an integer.

5. An apparatus according to any one of the preceding claims, wherein the set of backup devices comprises at least one of a smart card, a USB storage device, a hard drive and a CD.

6. An apparatus according to any one of the preceding claims, further configured to generate the private key and to provide a copy of the private key and an initial counter value to each backup device in the set of N backup devices.

7. An apparatus according to any one of the preceding claims, further configured to perform steps (i)-(iv) multiple times, each performance of steps (i)-(iv) except the first performance of steps (i)-(iv):
being performed upon every counter value in the range of counter values determined in the previous performance of step (ii) having been used in the previous performance of step (iv); and
determining in step (ii) the new range of counter values as counter values which are each different from all the counter values determined in all previous performances of step (ii).

8. An apparatus according to any one of the preceding claims, further configured to compare the new range of counter values to a maximum counter value, and when a counter value in the new range exceeds the maximum counter value, flag an error.

9. An apparatus according to any one of the preceding claims, which is associated with a physical interface operative to allow the apparatus to communicate during a period with a number of the backup devices which is at least the higher of R and W, the first and second sub-sets of the backup devices being selected from backup devices which are connected to the apparatus via the interface during the period.

10. An apparatus according to any one of the preceding claims, wherein the digital signature scheme uses a Leighton-Micali Signature Scheme (LMS) or an Extended Markel Signature Scheme (XMSS) to set the range of counter values and generate the digital signatures.

11. An apparatus according to any one of the preceding claims, further configured to, in step (i):
obtain, from the first subset of backup devices, a copy of the private key; and/or
obtain, from the first subset of backup devices, an indication of N and optionally at least one of an indication of R and an indication of W.

12. A security system comprising:
a set of N backup devices, wherein each backup device in the set comprises a copy of a private key; and
a plurality of apparatuses, each apparatus being according to any one of the preceding claims, wherein the apparatus is authorised to access the set of backup devices; and
optionally further including an access control mechanism, the plurality of apparatuses being operative to access selected ones of the plurality of backup devices during successive corresponding periods using the access control mechanism, and during each period the corresponding apparatus performs steps (i)-(iii), and preferably in which the access control mechanism comprises, for each apparatus, a corresponding associated physical interface, each physical interface being operative during a corresponding one of the periods to communicatively couple the corresponding apparatus to a number of the backup devices which is at least the higher of R and W.

13. A method of implementing a digital signature scheme, the method comprising:
obtaining, from each backup device of a first subset of a set of N backup devices, a corresponding indication of reserved counter values, wherein the first subset comprises R backup devices connected to the apparatus;
determining a new range of counter values which are all different from all the reserved counter values;
providing an indication of the new range of counter values to a second subset of the set of N backup devices, whereby the new range of counter values is added to the reserved counter values by updating a corresponding indication of reserved counter values stored on the second subset of backup devices, wherein the second subset comprises W backup devices connected to the apparatus, and wherein R + W > N; and
generating digital signatures using the private key and the counter values from the new range of counter values.

14. A method according to claim 13, wherein the step of providing the indication of the new range of counter values to the second subset of backup devices comprises overwriting the corresponding indication of reserved counter values stored on the second subset of backup devices with the indication of the new range of counter values.

15. A method according to claim 13 or 14, further comprising adding a backup device to the set of backup devices or removing a backup device from the set of backup devices, and then updating N accordingly.
